# EUROPEAN PATENT APPLICATION

(11) **EP 4 814 745 A1**
(43) Date of publication of application: **30.09.2026**
(21) Application number: 26159864.3
(22) Date of filing: 20.02.2026
(51) Int. Cl.: G06F 16/3329, G06F 16/29, G06N 3/044

(54) **GENERATING SPATIALLY DISTRIBUTED RESPONSE TO QUERY BY INTELLIGENT SELECTION OF TIME-SERIES REMOTE SENSING DATA**

(30) Priority: 24.03.2025 IN 202521027365
(71) Applicant: Tata Consultancy Services Limited, Maharashtra (IN)
(72) Inventor: PANDIT, Ankur, 453112 Indore (IN); MOHITE, Jayantrao, 400021 Mumbai (IN); SAWANT, Suryakant Ashok, 411028 Pune (IN); PAPPULA, Srinivasu, 500034 Hyderabad (IN)
(74) Representative: Goddar, Heinz J.

(57) **Abstract**

This disclosure relates generally to a method and system for generating spatially distributed response to query by intelligent selection of time-series remote sensing data. The current available methods for processing and analyzing geospatial data have limitations such as manual satellite data selection, limited natural language query support and the like. The method disclosed receives multi-contextual user query, intelligently selects the relevant time-series satellite data and climate information from repository using intents and entities generated utilizing pre-defined knowledge graph. The method intelligently selects time-series satellite data by creating and utilizing relationship strength-based node ranking graph. This time-series satellite data is combined with the climate data selected from climate repository to generate the spatially distributed response for the multi-contextual user query using machine learning model and large language model. The method enables stakeholders to access actionable insights without needing expertise in satellite data processing and using it for informed agricultural decision-making.

## Description

### CROSS-REFERENCE TO RELATED APPLICATIONS AND PRIORITY

The present application claims priority to Indian application no. 202521027365, filed on March 24, 2025.

### TECHNICAL FIELD

The disclosure herein generally relates to spatially distributed response to agriculture-based complex user queries, and, more particularly, to a method and system for generating spatially distributed response to query by intelligent selection of time-series remote sensing data.

### BACKGROUND

Remote sensing is highly valuable for sustainable agriculture. It helps enable efficient crop management, improving resource use, and reducing environmental impacts. Through satellite and aerial imagery, it provides real- or near-real- time insights into soil health, crop growth, water availability etc. This data helps farmers make informed decisions about irrigation, fertilizer application, and pest control, promoting practices that conserve resources and enhance yields. For example, vegetation indices like Normalized Difference Vegetation Index (NDVI) and Normalized Difference Water Index (NDWI) derived from remote sensing data allow for monitoring crop health and stress levels, leading to timely interventions.

The large volumes of remote sensing data are especially useful as they allow long term analysis and trend detection. By leveraging this historical data, researchers can study crop growth patterns, yield variability, and the impact of climate change on agriculture. With advanced analytics and AI, large satellite datasets help predict future trends and risks, enabling proactive and precise management practices in sustainable agriculture. This vast, continuous data supports evidence-based decisions that benefit both productivity and environmental sustainability.

Although vast amounts of satellite data are available from numerous sources, selecting the appropriate time-series satellite data to accurately address specific user queries is a complex, meticulous and tedious process. Each satellite offers unique temporal, spatial, and spectral characteristics, making it necessary to carefully evaluate and match these attributes with the precise needs of the model. Factors such as resolution, data frequency, and sensor type must align closely with the application, whether it's tracking crop health, monitoring land subsidence, or assessing climate impacts. The challenge lies in filtering through huge datasets, ensuring that the selected time-series data provides relevant and accurate insights without data redundancy. This process demands both technical expertise and precision to optimize data selection for effective and reliable model performance. Also, in remote sensing applications, accessing a complete, uninterrupted time-series dataset from a single satellite is often challenging. Issues like orbital changes, sensor malfunctions, or simply the periodic nature of data acquisition can lead to gaps in data, especially for applications that require consistent, long-term monitoring. In such cases, supplementary or complementary data sources, including other satellites with similar sensors or parameters, must be explored to bridge these gaps. For example, if one satellite sensor lacks data for certain dates or regions, other sensors with compatible spectral bands and spatial-temporal resolution can potentially fill these gaps. However, this task of identifying gaps, selecting complementary datasets, and ensuring that they match the required resolution, coverage, and acquisition frequency is complex. This complexity is further compounded by the wide array of available satellite data sources, each with different specifications, data formats, and acquisition patterns. To build a coherent time-series, an automated system is required.

Currently, a state-of-the-art cloud-based geospatial processing platform such as Google Earth Engine (GEE) is available which facilitates analyzing large-scale earth observation data. It provides access to a vast repository of satellite imagery and geospatial datasets, such as Landsat, Sentinel, MODIS, and climate data, enabling users to visualize and analyze changes in the Earth's surface over time. GEE allows users to write scripts in JavaScript or Python to process and analyze data directly on Google's powerful cloud infrastructure, eliminating the need for high performance local computing resources. Sentinel Hub is another cloud-based platform designed for accessing, processing, and analyzing satellite imagery in real time. It provides seamless access to a wide range of Earth observation data, including imagery from Sentinel-1, Sentinel-2, Landsat, MODIS, and commercial satellites, through a set of Application Programming Interfaces (APIs) and web interfaces. Sentinel Hub enables users to perform tasks such as visualization, band calculations, and data processing without the need for extensive local storage or high-performance computing infrastructure. In addition, The Open Data Cube (ODC) is also an open-source software platform designed to manage, analyze, and process large volumes of Earth observation (EO) satellite data efficiently. It provides a framework for storing and querying multidimensional geospatial data, particularly time-series imagery from satellites like Landsat, Sentinel, and others. ODC is widely used for applications such as land use monitoring, crop analysis, climate impact studies, and disaster management. However, these techniques have certain limitations such as manual satellite data selection, limited natural language query support, no built-in model integration for user query responses, and specialized programming knowledge requirement.

### SUMMARY

Embodiments of the present disclosure present technological improvements as solutions to one or more of the above-mentioned technical problems recognized by the inventors in conventional systems. For example, in one embodiment, a method for generating spatially distributed response to query by intelligent selection of time-series remote sensing data is provided. The method includes generating (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model, from a multi-contextual user query received via a user interface of a large language model (LLM). Furthermore, the method includes identifying one or more actions and one or more data sources amongst a plurality of data sources by performing an intent-entity based graph traversal on a pre-defined knowledge graph using the one or more intents and the one or more entities. The plurality of data sources comprises a remote sensing data source and a climate data source. Further the method includes, selecting (i) a time-series satellite data from a dynamically updated node selection graph in a satellite data repository, and (ii) a time-series climate data from a climate data repository to generate a time-series data corresponding to the identified one or more actions. The time-series satellite data is selected if at least one data source amongst the one or more data sources identified is the remote sensing data source. The time-series climate data is selected if at least one data source amongst the one or more data sources identified is the climate data source. Then the method includes selecting a machine learning model by traversing the pre-defined knowledge graph utilizing the generated time-series data. Further the method includes generating a user response as at least one of (i) spatially distributed image, or (ii) spatially distributed data, by providing the generated time-series data to the machine learning model as input. Finally the method includes generating a final user response associated with the multi-contextual user query by the large language model utilizing the user response and the multi-contextual user query.

In another aspect, a system for generating spatially distributed response to query by intelligent selection of time-series remote sensing data is provided. The system comprises memory storing instructions; one or more communication interfaces; and one or more hardware processors coupled to the memory via the one or more communication interfaces, wherein the one or more hardware processors are configured by the instructions to generate (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model, from a multi-contextual user query received via a user interface of a large language model (LLM). Furthermore, the system includes identifying one or more actions and one or more data sources amongst a plurality of data sources by performing an intent-entity based graph traversal on a pre-defined knowledge graph using the one or more intents and the one or more entities. The plurality of data sources comprises a remote sensing data source and a climate data source. Further the system includes selecting (i) a time-series satellite data from a dynamically updated node selection graph in a satellite data repository, and (ii) a time-series climate data from a climate data repository to generate a time-series data corresponding to the identified one or more actions. The time-series satellite data is selected if at least one data source amongst the one or more data sources identified is the remote sensing data source. The time-series climate data is selected if at least one data source amongst the one or more data sources identified is the climate data source. Then the system includes selecting a machine learning model by traversing the pre-defined knowledge graph utilizing the generated time-series data. Further the system includes, generating a user response as at least one of (i) spatially distributed image, or (ii) spatially distributed data, by providing the generated time-series data to the machine learning model as input. Finally, the system includes generating a final user response associated with the multi-contextual user query by the large language model utilizing the user response and the multi-contextual user query.

The pre-defined knowledge graph is constructed based on agriculture data, satellite data and climate data, using a plurality of intents, a plurality of entities, a plurality of actions, a plurality of data sources and data associated with the plurality of data sources, a set of machine learning models.

The node selection graph is dynamically updated using the time-series satellite data received in a pre-defined time interval by arranging each data entry in the time-series satellite data in a three-dimensional array. A first dimension of the three-dimensional array represents a satellite identifier of the data entry, a second dimension of the three-dimensional array represents a satellite pass date of the data entry, and a third dimension of the three-dimensional array represents a satellite type of the data entry. Then the three-dimensional array for each data entry is projected into a two-dimensional map by aggregating the first dimension, the second dimension and the third dimension of the three-dimensional array. The two-dimensional map represents a spatial structure with a latitude and a longitude corresponding to the data entry. Further an embedded vector corresponding to the two-dimensional map of each data entry is created using an attribute encoding technique. The embedded vector is stored in a database. Then the node selection graph is generated by creating a set of relationships between data entries of the plurality of satellite data sources. The node selection graph comprises a plurality of nodes and a plurality of edges. It is generated by first representing each data entry as a node comprising a set of attributes in the node selection graph. The set of attributes comprises a satellite name, a satellite data identifier, a date representing a time of data capture, spatial and temporal resolution, and a set of pre-computed indices. Then a weight is determined for a relationship represented as an edge in the node selection graph, between any two data entries based on a set of relation types. The set of relation types comprises a direct common index, a data continuity, a spatial resolution, a temporal resolution, and a complementary observation.

The time-series satellite data is selected from the node selection graph for the multi-contextual user query by selecting a primary node in the node selection graph based on the satellite name identified from the one or more actions. Then a set of rows is determined for the time-series satellite data with each row comprising a set of nodes associated with each satellite amongst a set of satellites. The set of nodes are connected to the primary node. The weight of the edge of each node in the set of nodes connected to the primary node is greater than a pre-defined value. Further the set of nodes is combined from each row based on the date to generate a series of satellite data. Finally, the time-series satellite data is returned as an ordered set of the series of satellite data for each row.

In yet another aspect, there is provided a computer program product comprising a non-transitory computer readable medium having a computer readable program embodied therein, wherein the computer readable program, when executed on a computing device causes the computing device for generating spatially distributed response to query by intelligent selection of time-series remote sensing data is provided. The computer readable program includes generating (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model, from a multi-contextual user query received via a user interface of a large language model (LLM). Furthermore, the computer readable program includes identifying one or more actions and one or more data sources amongst a plurality of data sources by performing an intent-entity based graph traversal on a pre-defined knowledge graph using the one or more intents and the one or more entities. The plurality of data sources comprises a remote sensing data source and a climate data source. Further the computer readable program includes, selecting (i) a time-series satellite data from a dynamically updated node selection graph in a satellite data repository, and (ii) a time-series climate data from a climate data repository to generate a time-series data corresponding to the identified one or more actions. The time-series satellite data is selected if at least one data source amongst the one or more data sources identified is the remote sensing data source. The time-series climate data is selected if at least one data source amongst the one or more data sources identified is the climate data source. Then the computer readable program includes selecting a machine learning model by traversing the pre-defined knowledge graph utilizing the generated time-series data. Further the computer readable program includes, generating a user response as at least one of (i) spatially distributed image, or (ii) spatially distributed data, by providing the generated time-series data to the machine learning model as input. Finally the computer readable program includes, generating a final user response associated with the multi-contextual user query by the large language model utilizing the user response and the multi-contextual user query.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for generating spatially distributed response to query by intelligent selection of time-series remote sensing data according to some embodiments of the present disclosure.
FIG. 2A and FIG.2B, collectively referred as FIG.2, is an exemplary flow diagram illustrating a method for generating spatially distributed response to query by intelligent selection of time-series remote sensing data according to some embodiments of the present disclosure.
FIG. 3 is an overall block diagram depicting the method for generating spatially distributed response to query by intelligent selection of time-series remote sensing data and climate data according to some embodiments of the present disclosure.
FIG. 4 illustrates a pre-defined knowledge graph constructed based on agriculture data, satellite data and climate data according to some embodiments of the present disclosure.
FIG. 5 illustrates a satellite data arrangement in a satellite data repository according to some embodiments of the present disclosure.
FIG.6 is an example illustration of relationship between satellite data in a node selection graph according to some embodiments of the present disclosure.
FIG.7 is an example illustration of relationships among different satellite data and their corresponding weights according to some embodiments of the present disclosure.
FIG. 8 is an example illustration of selection of time-series satellite data based on relationship weights and final time-series satellite data generation according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The current available methods for processing and analyzing geospatial data such as Google Earth Engine (GEE), Sentinel Hub and Open Data Cube (ODC) have limitations when considered in the context of a Generative Artificial Intelligence (GenAI) system designed for automatic satellite data selection and query-based responses. These limitations as mentioned in background section above include manual satellite data selection, limited natural language query support, no built-in model integration for user query responses, and specialized programming knowledge requirement.

Embodiments of the present disclosure provide a GenAI based method that provides robust response in spatially distributed format to complex user query related to the agriculture domain. The method disclosed eliminates the requirement of manual selection of user query specific satellite and/or climatic data from the database. The method processes complex user queries, select and process relevant time-series satellite data. This method further employs an appropriate computational model and generates results in a spatially distributed format. This benefits both technical and non-technical users by removing the burden of satellite data selection and analysis. Upon receiving a multi-contextual user query, the method intelligently selects the relevant time-series satellite data and climate information. This is done by creating a relationship strength-based node ranking graph and utilizing this graph to select the relevant time-series satellite data. This is combined with the climate data selected from a climate repository to generate the spatially distributed response for the multi-contextual user query. By seamlessly integrating remote sensing and climatic data, this method offers insights into crop development stages, yield impacts, and spatial variations influenced by climate. This enable stakeholders such as researchers, policymakers, and farmers to access actionable insights without needing expertise in satellite data processing and using it for informed agricultural decision-making.

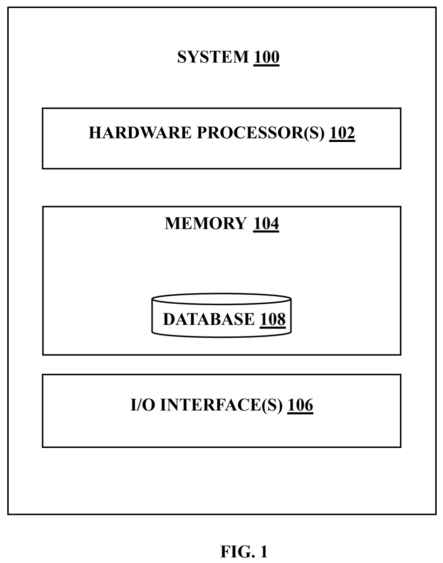

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG. 1 illustrates an exemplary block diagram of a system for generating spatially distributed response to query by intelligent selection of time-series remote sensing data according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules, such as intent and entity generation module, time-series satellite data selection module, climate data selection module (not shown), and the like. Further, the plurality of modules includes programs or coded instructions that supplement applications or functions performed by the system 100 for executing different steps involved in the process for generating spatially distributed response by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database may include satellite data repository, climate data repository etc.

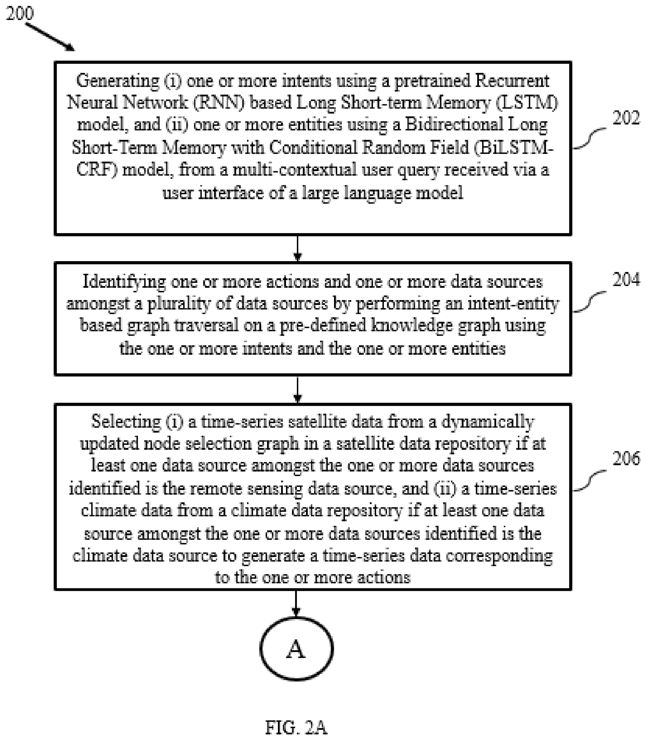

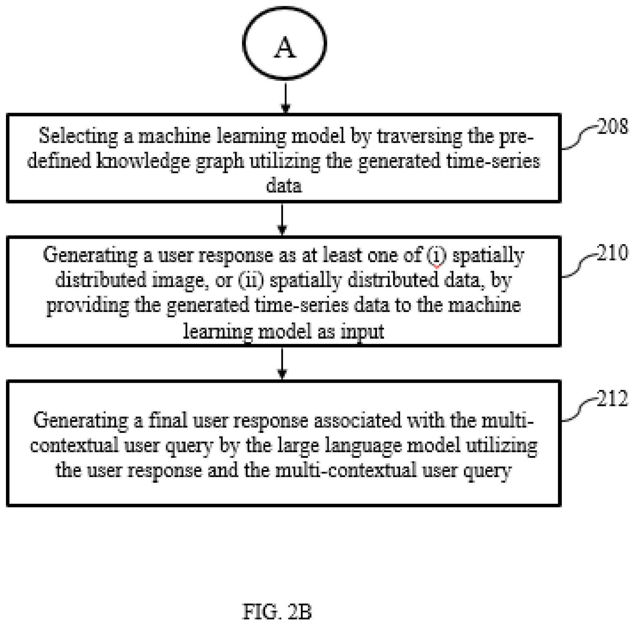

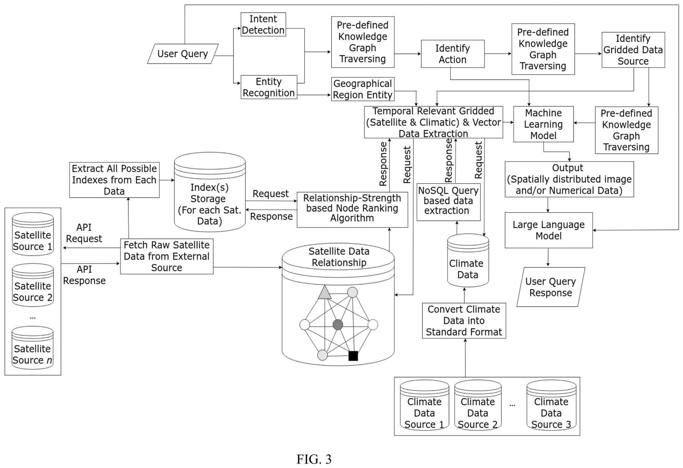

FIG. 2A and FIG.2B, collectively referred as FIG.2, is an exemplary flow diagram illustrating a method for generating spatially distributed response to query by intelligent selection of time-series remote sensing data according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1, and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof. The overall steps explained henceforth are shown as a block diagram in FIG. 3. FIG. 3 is an overall block diagram depicting the method for generating spatially distributed response to query by intelligent selection of time-series remote sensing data according to some embodiments of the present disclosure.

Now referring to FIG. 2A, at step 202 of the method 200, one or more hardware processors 102 are configured to generate (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model. The one or more intents and the one or more entities are generated from a multi-contextual user query. This multi-contextual user query is received via a user interface of a large language model (LLM). The user sends the multi-contextual query on the user interface of the LLM model. For example the multi-contextual query can be a) Estimate crop yield variability in different regions based on changing climate conditions and soil moisture levels over the last decade. b) What is the impact of changing precipitation patterns and temperature extremes on the phenological stages of major crops in India's northern agricultural belt over the past 20 years? The one or more intents detection is to determine what the user wants based on their query. For this, a fine-tuned pretrained RNN based LSTM model is used. This model is trained on collected dataset of multi-contextual user queries called as training queries, each labelled with the correct intent. Table 1, below shown provides sample queries and their corresponding intents.

**Table 1**

| **S.No** | **User Query** | **Intent** |
|---|---|---|
| 1 | What is the current health status of wheat crops in Punjab using NDVI data? | Crop Health Analysis |
| 2 | How much rainfall did Madhya Pradesh receive in the last 10 years? | Weather Analysis |
| 3 | What is the impact of rising temperatures on soybean yield in Rajasthan? | Climate Impact |
| 4 | Generate a land use/land cover map for Gujarat using Sentinel-2 data | Remote Sensing Analysis |
| 5 | Which areas in Maharashtra are experiencing water stress for irrigation this season? | Crop Health Analysis |
| 6 | Analyze how monsoon variability has affected rice cultivation over the past decade. | Climate Impact |
| 7 | Provide the average temperature and precipitation for Bihar in June 2023. | Weather Analysis |
| 8 | Detect urban growth patterns around Delhi using Landsat data from 2000 to 2020. | Urban Growth, Remote Sensing Analysis |
| 9 | Retrieve vegetation index data for monitoring coffee plantations in Kerala. | Crop Health Analysis, Remote Sensing Analysis |
| 10 | What are the drought-prone areas in Tamil Nadu based on historical rainfall data? | Climate Impact |

The dataset should cover the diverse range of questions users might ask, with intent labelled like "Crop Health Analysis", "Weather Analysis", "Climate Impact", "Remote sensing analysis", etc. Here, each training query preprocessed which involves different steps such as tokenization of each training query, normalization by lowercasing, removal of stop words, and optionally stemming or lemmatizing words and conversion of text to a numerical (embedding) compatible with NLP Model. For example, suppose user sent a query as "What is the impact of changing precipitation patterns and temperature extremes on the phenological stages of major crops in India's northern agricultural belt over the past 20 years?". The intents detected by the employed RNN based LSTM model is- "Climate impact Analysis on Crop Phenology". Later, the detected complex intent will be further divided into sub-intents i.e. action intent representing main action or purpose and domain specific intent representing the target of the action within a specific field like [Action Intent: "Climate impact Analysis", Domain Intent: "Crop Phenology"] using rule-based approach that leverages syntactic structure and domain specific knowledge.

Generating one or more entities involves identifying specific terms or concepts within the user query that give context to the intent. The BiLSTM-CRF model is used for entity recognition. This model will identify key entities like weather (precipitation, temperature), phenology (phenological stages), agriculture (crops), and location (India's northern agriculture belt). For example, in the user query "What is the impact of changing precipitation patterns and temperature extremes on the phenological stages of major crops in India's northern agriculture belt over the past 20 years?", the one or more entities include,
i) **Precipitation patterns** are likely categorized as a weather entity, as it relates to rainfall.
ii) **Temperature extremes** are likely to be categorized as also a weather entity, representing extreme temperature conditions.
iii) **Phenological stages** are likely to be categorized as a crop phenology or agriculture entity, referring to the growth stages of crops.
iv) **Major crops** are likely to be categorized as an agriculture entity, referring to the primary crops in the region.
v) **India's northern agriculture belt** is likely to be categorized as a geographical region entity, specifying a location that is relevant to the query.
vi) **Over the Past 20 Years** is likely to be categorized as the temporal aspect, indicating that the user is interested in historical data analysis.

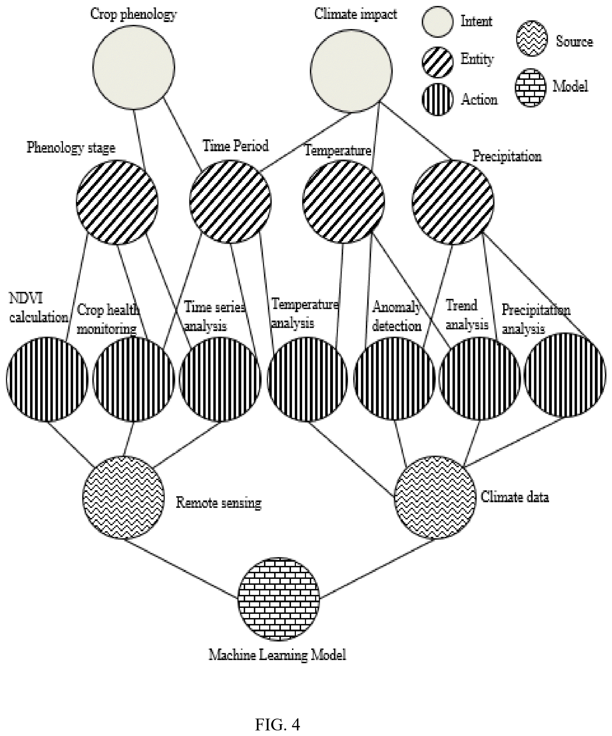

Further, at step 204 of the method 200, the one or more hardware processors 102 are configured to identify one or more actions and one or more data sources amongst a plurality of data sources by performing an intent-entity based graph traversal on a pre-defined knowledge graph using the one or more intents and the one or more entities. The plurality of data sources comprises a remote sensing data source and a climate data source. Once intents and entities are identified in the multi-contextual user query, the intent-entity based graph traversal rules help identify the sequence of actions to take. Here, a pre-defined knowledge graph is constructed based on agriculture and climate information. The pre-defined knowledge graph is constructed based on agriculture data, satellite data and climate data, using a plurality of intents, a plurality of entities, a plurality of actions, a plurality of data sources and data associated with the plurality of data sources, a set of machine learning models. FIG. 4 illustrates a pre-defined knowledge graph constructed based on agriculture data, satellite data and climate data according to some embodiments of the present disclosure. This pre-defined graph focus on key domains like crops, soil types, pests, irrigation methods, temperature, precipitation, and extreme weather events from reliable sources. For agriculture, this includes datasets from organizations like Food and Agriculture Organization (FAO), Indian Council of Agricultural Research (ICAR), or International Soil Reference and Information Centre (ISRIC), covering crop-specific data, soil properties, and pest/disease information. Climate data can be obtained from weather monitoring organizations (e.g., IMD, NOAA), satellite sources (e.g., MODIS, Sentinel), and reanalysis datasets like ERA5. Structuring this data involves creating entities (e.g., crop types, weather parameters) and defining relationships (e.g., "affects," "requires") between them. The process starts from the node of the pre-defined connected graph matching the intent(s), then traverses to associated entities and actions in that pre-defined knowledge graph. The Breadth-First Search (BFS) or Depth-First Search (DFS) graph traversal algorithm is employed here to identify actions required to fulfill the intent. The steps below explains the traversal of the pre-defined knowledge graph,
(i) Initialize: Begin traversal from the intent node (e.g., ["Climate Impact", "Crop Phenology").
(ii) Traverse to entities: Move to entity nodes associated with the intent (e.g., Temperature, Precipitation, Phenological Stages, Time-Period).
(iii) Traverse to actions: For each entity node, find action nodes directly linked or reachable through dependencies. Collect actions that match the query requirements.

An example of intent-based graph traversal is provided as below, Consider the user query: "What is the impact of changing precipitation patterns and temperature extremes on the phenological stages of major crops in India's northern agriculture belt over the past 20 years?". The graph traversal is worked as below,
A. Starting at Intent Node:
   a) Start at Climate Impact Analysis on Crop Phenology.
   b) Traverse to Entities:
      Follow edges to Temperature, Precipitation, Phenological
      Stages, Major Crops, Northern Agriculture Belt, Past 20 Years.
B. Identify Relevant Actions for Each Entity:
   a) Temperature: Traverse to nodes like Temperature Analysis, Anomaly Detection, Trend Analysis.
   b) Precipitation: Traverse to Precipitation Analysis, Trend Analysis, Anomaly Detection.
   c) Phenological Stages: Traverse to Vegetation Index Calculation, Time-Series Analysis, Crop Health Monitoring.
   d) Time Period (Past 20 Years): Traverse to Temporal Analysis node, which filters actions to focus on the specified timeframe.
C. Collect Actions:
   a) As actions are reached, add them to the required list of actions to fulfill the user query.
   b) Example actions identified may include:
      i. Calculate Vegetation Index for phenological stages over 20 years.
      ii. Analyze Temperature Trends over 20 years.
      iii. Perform Precipitation Anomaly Detection over 20 years.
      iv. Conduct Temporal Analysis on Vegetation Index and weather data over 20 years.
D. Identify the Relevant Source
   a) Finally, traverse to the source of data i.e. either remote sensing or other depending on the identified actions.
   b) Remote sensing data will be selected from the pre-existing centralized satellite data repository
   c) Climate data will be selected from a pre-existing climate data repository consisting of all kinds of global climate data records generated by multiple agencies.

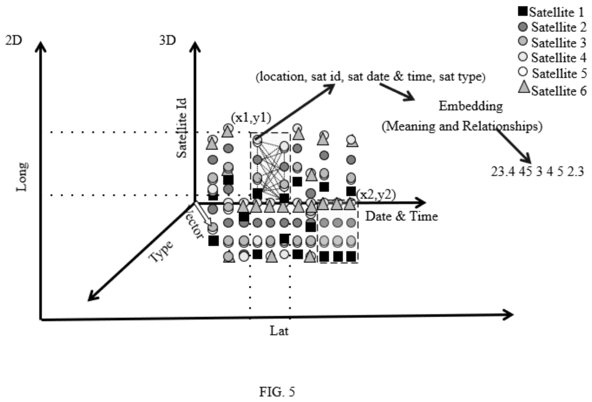

Further at step 206 of the method 200, the one or more hardware processors 102 are configured to select (i) a time-series satellite data from a dynamically updated node selection graph in a satellite data repository and (ii) a time-series climate data from a climate data repository. The time-series satellite data is selected if at least one data source amongst the one or more data sources identified is the remote sensing data source. The time-series climate data is selected if at least one data source amongst the one or more data sources identified is the climate data source. This selection is done to generate a time-series data corresponding to the one or more actions. The node selection graph is dynamically updated using the time-series satellite received in a pre-defined time interval. This updation is explained henceforth. All the remote sensing satellite data (from starting till recent) from multiple sources are pulled from request-response Application Programming Interface (API) and stored in the satellite data repository. The request-response API can be executed on temporal basic (hourly/daily) so that the satellite data repository is updated. Each satellite data entry contains the following attributes such as satellite identifier (y-axis), a satellite pass date (x-axis), a satellite type (z-axis), latitude (x-axis in two-dimension), longitude (y-axis in two-dimension). Initially, the satellite identifier, the satellite pass date, and the satellite type in a three-dimensional structure are mapped and later, project this three-dimensional structure onto a two-dimensional map with latitude and longitude as the primary axes. FIG. 5 illustrates a satellite data arrangement in a satellite data repository according to some embodiments of the present disclosure. FIG. 5 shows this data arrangement in three-dimension and two-dimension. The projection to two-dimension essentially collapses the satellite identifier and the satellite type dimensions, yielding a two-dimensional map focused on latitude and longitude. Here initially aggregate or compress data across satellite identifier and the satellite type dimensions. This can be done by averaging, summing, or selecting specific slices of interest. Further the resulting two-dimensional map (latitude, longitude) represents the spatial structure, with each location (latitude, longitude) containing summarized information across the satellite pass date, the satellite identifier, and the satellite type.

Further each data entry is embedded for efficient storage and retrieval. To create embeddings for each data entry, each attribute is transformed into numerical values using below approach such as attribute encoding and embedding vector creation. In attribute encoding, for the satellite identifier a fixed numerical scale is used to quantify different resolutions. The satellite pass date is converted to a timestamp or numerical encoding (e.g., days since a reference date). The satellite type is assigned to a unique integer to each satellite type. The latitude and longitude are kept as it is. In embedding vector creation an embedding vector for each data entry is created as follows: [resolution, date, type, latitude, longitude]. This vector encodes all relevant information for each data entry, making it easily searchable and comparable. The resulting two-dimensional data structure is saved with embedded metadata, which enables efficient querying and retrieval. The embedded vector is stored in a geospatial database (like PostGIS) with latitude and longitude as indices. Indexing by latitude and longitude facilitates spatial queries, while embedding vectors allows search by satellite pass date, satellite identifier, and satellite type effectively.

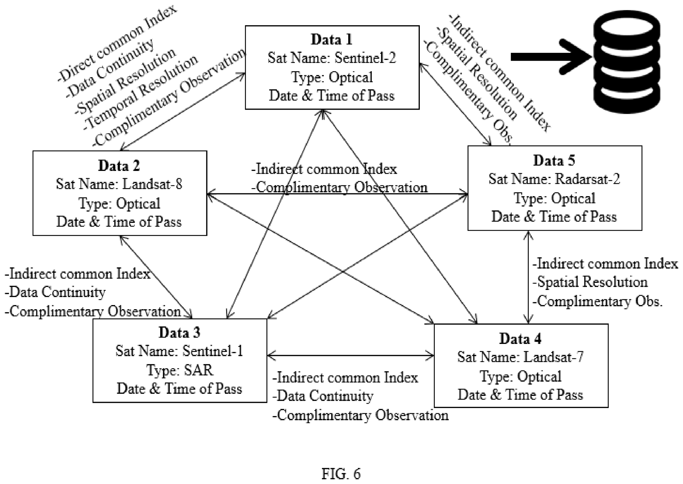

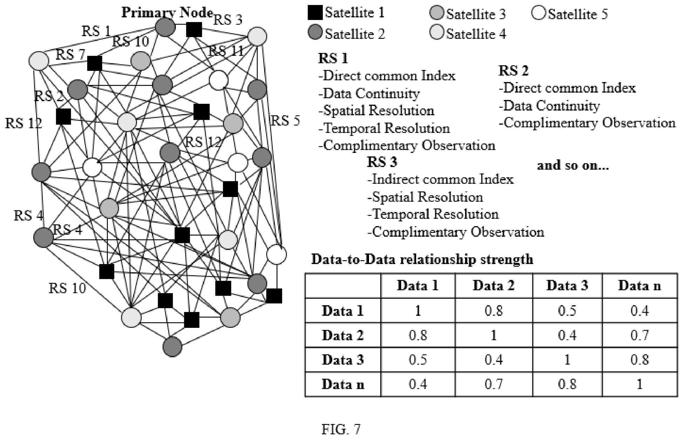

Further, after storage of the embedded vector for each data entry, the node selection graph is generated by creating a set of relationships between data entries of the plurality of satellite data sources. To construct a ranked time-series of satellite data based on pre-defined relationships, a graph-based approach is followed to represent the relationships among different satellite data sources and dates. FIG.6 is an example illustration of relationship between satellite data in a node selection graph according to some embodiments of the present disclosure. Each satellite data entry (e.g., Sentinel-2 data from a specific date) is represented as a node. Nodes contain the following attributes:
- Satellite Name (e.g., Sentinel-2, Landsat-8)
- Satellite Data Id (e.g., S2B_MSIL2A_20221027T100029_N0400_R122_T32TQM_20221027T1249 57)
- Date (time of data capture)
- Spatial and temporal resolutions
- Pre-computed indices not limited to NDVI, NDWI, radar backscatter, etc.
The relationships between satellite data entries are represented as edges between nodes. Each edge is given a weight based on the relationship type and strength:
1. Direct Common Index: Normalized Difference Vegetation Index (NDVI), Normalized Difference Water Index (NDWI), etc. If two datasets generate these indices, assign a higher weight to the edge.
2. Data Continuity: If two datasets are temporally close (or belong to a continuous time-series), this also increases the weight of the edge.
3. Spatial Resolution: If the resolutions are similar, assign a higher weight.
4. Temporal Resolution: Satellite data entries close in date may have stronger relationships.
5. Complementary Observations: For example, radar data might complement optical data in cloudy conditions.
Basically, the more relationships two datasets share as shown in FIG. 6 and FIG. 7, the higher the edge weight between them as shown in FIG. 7, which signifies a stronger relationship.

Once the relationships (edges) are established, rank the nodes based on the relationship strength or weights. For this a primary node is selected first. For primary node selection start with the node obtained from action. For example, if the user query is "Calculate NDVI for phenological stages over 20 years for a region", then 20 years back date will be selected and satellite data (node) for that date will be identified. This node becomes the primary node.

Secondly, strongly related nodes are identified. For this search for others, for example- Sentinel-2 nodes with the highest weighted edges to the primary node. These nodes represent satellite data with the strongest continuity and temporal resolution for the primary node. These strongly related nodes will form the first row in the time-series satellite data. Thirdly, expand the search to other satellites. For example, search for Landsat-8 nodes and other satellite data types that have a relationship with the primary node or its strongly related nodes. Place these in subsequent rows based on descending order of relationship strength.

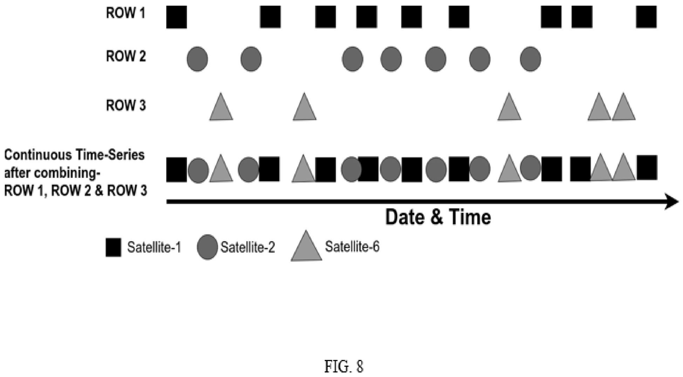

After the relationships are established in the node selection graph, the time-series satellite data is generated. For this arrange the nodes in each row so that each row corresponds to a level of relationship (starting from the strongest) as shown in FIG. 8. FIG. 8 is an example illustration of selection of time-series satellite data based on relationship weights and final time-series satellite data generation according to some embodiments of the present disclosure. For instance, as shown in FIG. 8, row 1 contains all Sentinel-2 nodes closely related to the primary Sentinel-2 node. Row 2 might contain Landsat-8 nodes with a moderate relationship, and so on. Then combine all rows, aligning the nodes based on date to construct a continuous time-series. Each node in this series corresponds to a data point, and nodes are ordered by date.

The primary node based on user specifications (action identified) (e.g., a Sentinel-2 data entry for a given date and region) is identified. Further the node selection graph is traversed by gathering nodes from row 1 (same or similar satellite with strong relationships). Next, gather nodes from row 2 (next satellite type with weaker relationships), and so forth. Compile the nodes from each row into a single series sorted by date. Finally return the final time-series as an ordered collection of multi-satellite data points. This graph-based method allows flexibility in adding new satellite data or relationships and provides a dynamic way to rank and retrieve satellite data for multi-source time-series generation. As new satellite data enters the satellite data repository, all possible predefined indexes in spatially distributed format will be calculated based on the standard approach. For example, the following indexes mentioned below in Table 2 can be directly derived from Sentinel-2 satellite data. Furthermore, below mentioned indexes can be also calculated indirectly from Sentinel-1 data with machine learning approach using direct indexes i.e. radar backscatter in vertical-vertical (VV) and vertical-horizontal (VH) polarization.

**Table 2**

| **Category** | **Index name** |
|---|---|
| Vegetation Indices | Normalized Difference Vegetation Index (NDVI) |
| | Enhanced Vegetation Index (EVI) |
| | Green Normalized Difference Vegetation Index (GNDVI) |
| | Red-edge NDVI (RENDVI) |
| | Soil Adjusted Vegetation Index (SAVI) |
| | Normalized Difference Red Edge (NDRE) |
| | Chlorophyll Index (CIgreen) |
| | Wide Dynamic Range Vegetation Index (WDRVI) |
| Water Indices | Normalized Difference Water Index (NDWI) |
| | Modified Normalized Difference Water Index (MNDWI) |
| | Normalized Difference Moisture Index (NDMI) |
| | Automated Water Extraction Index (AWEI) |
| Soil and Built-up Indices | Bare Soil Index (BSI) |
| | Soil Moisture Index (SMI) |
| | Normalized Difference Built-up Index (NDBI) |
| | Urban Index (UI) |
| Other Environmental Indices | Normalized Burn Ratio (NBR) |

Further, to automatically generate a NoSQL query to retrieve the required data for the user's query for example, "What is the impact of changing precipitation patterns and temperature extremes on the phenological stages of major crops in India's northern agriculture belt over the past 20 years?", a structured query is formulated based on the identified entities: temperature, precipitation, and the past 20 years' timeframe for India's northern agriculture belt. All kinds of location-based time-series long-term climatic data of entire globe are saved in MongoDB database. Initially, the key climatic entities from the user query will be extracted as mentioned earlier. Entities are categories such as
1. Variables of Interest: Temperature and Precipitation.
2. Time Range: Past 20 years.
3. Geographical Focus: Northern agriculture belt of India.
These entities act as filters for the NoSQL query. Further these extracted entities are mapped to the structure in the climate data repository such as temperature and precipitation fields are mapped to the repository's schema. Time Range corresponds to the timestamp field, restricted to the past 20 years. Geographic. Focus corresponds to a latitude and longitude range or a predefined region code in the repository that represents the northern agriculture belt of India. Using the identified fields and filters, a NoSQL query is generated.
The below is an example based on a common NoSQL query structure for MongoDB database:

```
     "json
     {
            "variables": {
                  "$in": ["temperature", "precipitation"]
            },
            "date": {
                  "$gte": "2004-01-01", ## Start date, 20 years ago from the
                  current date
                  "$lte": "2024-01-01" ## End date (current date)
            },
            "location": {
                  "$geoWithin": {
                         "$geometry": {
                                "type": "Polygon",
                                "coordinates": [
                                       [ /* Define the bounding lat-long
                                       coordinates for northern India */ ]
                                ]
                         }
                  }
            }
     }
      ...
```

Variables Filter for example '"$in": ["temperature", "precipitation"]' specifies that only temperature and precipitation fields should be retrieved. The date filter uses '"$gte"' (greater than or equal to) and '"$lte"' (less than or equal to) to limit the results to the "past 20 years". The '"$geoWithin"' operator restricts results to a specific geographic region. Here, a polygon with lat-long coordinates are used that define the northern agriculture belt of India. Once the NoSQL query is executed, the retrieved data points will consist of temperature and precipitation values for each timestamp within the specified date range and limited to locations within the northern agricultural belt. The result set is structured as a time-series, ready for further analysis to assess the impact on crop phenology. This NoSQL query generation process enables to automatically retrieve relevant temperature and precipitation data for the past 20 years for further analysis, helping to understand climate impacts on crop phenology, which is derived in the previous step using time-series remote sensing data.

Further at step 208 of the method 200, the one or more hardware processors 102 are configured to select a machine learning model by traversing the pre-defined knowledge graph as depicted in FIG. 4, utilizing the generated time-series data. Once the time-series satellite data and time-series climatic data are identified based on the above-mentioned approach, the pre-defined knowledge graph is traversed to identify the appropriate machine learning model for user response generation.

At step 210 of the method 200, the one or more hardware processors 102 are configured to generate a user response as at least one of (i) spatially distributed image, or (ii) spatially distributed data, by providing the generated time-series data to the machine learning model as input. For example, in the context of the user query, to simplify the process of assessing climate impact on crop phenology using NDVI, NDWI, temperature (in degree centigrade), and precipitation (in millimeters (mm)) data, it is represented with an equation. This will model the relationship between climate variables (temperature and precipitation) and vegetation health indicators (NDVI and NDWI) as a proxy for crop phenology. Considering the following factors as below denoted,
*NDVIₜ*: NDVI at time (t)
*NDWIₜ*: NDWI at time (t)
*Tempₜ*: Temperature at time (t)
*Precₜ*: Precipitation at time (t)
*Impactₜ*: Impact score at time (t) that indicates how temperature and precipitation affect vegetation health (proxy for crop phenology).
An equation that combines these factors is represented as below in equation (1), ${Impact}_{t} = α . {ΔTemp}_{t} + β . {ΔPrec}_{t} + γ . {ΔNDVI}_{t} + δ . {ΔNDWI}_{t}$ Where *ΔTempₜ* = *Tempₜ - AvgTempt* is the difference between the temperature at time (t) and the long-term (for example 30 years) average temperature (*AvgTempt*),
For example, *Tempₜ* represents temperature on 26th December 2024. *AvgTempₜ* is the average of temperature value on 26th December 2024 (1994 to 2024) for past 30 years.
Here,
*Tempₜ* can be mentioned in spatially distributed format as, $\begin{matrix}{Temp}_{t} = \\ \begin{matrix}34 & 34 & 33 & 32 & 34 & 36 \\ 33 & 33 & 33 & 32 & 35 & 36 \\ 32 & 34 & 34 & 34 & 35 & 35 \\ 32 & 32 & 33 & 33 & 34 & 34 \\ 34 & 34 & 32 & 34 & 35 & 33 \\ 33 & 33 & 33 & 32 & 32 & 33\end{matrix}\end{matrix}$ Similarly, *AvgTempₜ* can be mentioned in spatially distributed format as, $\begin{matrix}{AvgTemp}_{t} = \\ \begin{matrix}30 & 31 & 32 & 32 & 34 & 36 \\ 32 & 32 & 32 & 32 & 33 & 34 \\ 31 & 30 & 30 & 30 & 30 & 33 \\ 30 & 30 & 30 & 30 & 30 & 30 \\ 31 & 32 & 30 & 31 & 31 & 32 \\ 31 & 31 & 31 & 30 & 31 & 31\end{matrix}\end{matrix}$ $\begin{matrix}Then , {ΔTemp}_{t} = \\ \begin{matrix}4 & 3 & 1 & 0 & 0 & 0 \\ 1 & 1 & 1 & 0 & 2 & 2 \\ 1 & 4 & 4 & 4 & 5 & 2 \\ 2 & 2 & 3 & 3 & 4 & 4 \\ 3 & 2 & 2 & 3 & 4 & 1 \\ 2 & 2 & 2 & 2 & 1 & 2\end{matrix}\end{matrix}$ *ΔPrecₜ = Precₜ - AvgPrecₜ* is the difference between the precipitation at time(t) and the long-term (for example 30 years) average precipitation (*AvgPrecₜ*) at time t, For example, *Precₜ* represents precipitation on 26th December 2024. *AvgPrecₜ* is the average of precipitation value on 26th December (1994 to 2024) for past 30 years. *Precₜ* can be mentioned in spatially distributed format as, $\begin{matrix}{Prec}_{t} = \\ \begin{matrix}3 & 3 & 6 & 6 & 12 & 10 \\ 7 & 7 & 7 & 3 & 3 & 3 \\ 5 & 5 & 5 & 6 & 6 & 6 \\ 3 & 9 & 3 & 6 & 3 & 3 \\ 5 & 5 & 5 & 5 & 5 & 5 \\ 3 & 3 & 5 & 6 & 6 & 6\end{matrix}\end{matrix}$ Similarly, *AvgPrecₜ* can be mentioned in spatially distributed format as, $\begin{matrix}{AvgPrec}_{t} = \\ \begin{matrix}0 & 2 & 4 & 5 & 10 & 9 \\ 6 & 4 & 4 & 0 & 0 & 0 \\ 3 & 3 & 3 & 2 & 4 & 5 \\ 0 & 7 & 0 & 3 & 2 & 1 \\ 1 & 2 & 5 & 2 & 0 & 4 \\ 2 & 0 & 5 & 4 & 5 & 5\end{matrix}\end{matrix}$ $\begin{matrix}Then , {ΔPrec}_{t} = \\ \begin{matrix}3 & 1 & 2 & 1 & 2 & 1 \\ 1 & 3 & 3 & 3 & 3 & 3 \\ 2 & 2 & 2 & 4 & 2 & 1 \\ 3 & 2 & 3 & 3 & 1 & 2 \\ 4 & 3 & 0 & 3 & 5 & 1 \\ 1 & 3 & 0 & 2 & 1 & 1\end{matrix}\end{matrix}$ Next*,ΔNDVIₜ = NDVIₜ - AvgNDVIₜ* is the difference between the NDVI at time (t) and the long term (for example 30 years) average NDVI (*AvgNDVIₜ*)*,* representing the deviation in vegetation health.
For example *NDVIₜ* represents precipitation on 26th December 2024. *AvgNDVIₜ* is the average of NDVI value on 26th December (1994 to 2024) for past 30 years. *ΔNDWIₜ = NDWIₜ - AvgNDWIₜ* is the difference between the NDWI at time (t) and the long term (for example 30 years) the average NDWI (*AvgNDWIₜ*) at time t, indicating water content in vegetation. For example- *NDWIₜ* represents precipitation on 26th December 2024. (*AvgNDWIt*) is the average of NDWI value on 26th December (1994 to 2024) for past 30 years.
Now, suppose, similar to *ΔTempₜ* and *ΔPrecₜ*, the *ΔNDVIₜ* and *ΔNDWIₜ* are derived as, $\begin{matrix}{ΔNDVI}_{t} = \\ \begin{matrix}0.3 & 0.1 & 0.2 & 0.1 & 0.2 & 0.1 \\ 0.1 & 0.3 & 0.3 & 0.3 & 0.3 & 0.3 \\ 0.2 & 0.2 & 0.2 & 0.4 & 0.2 & 0.1 \\ 0.3 & 0.2 & 0.3 & 0.3 & 0.1 & 0.2 \\ 0.4 & 0.3 & 0 & 0.3 & 0.5 & 0.1 \\ 0.1 & 0.3 & 0 & 0.2 & 0.1 & 0.1\end{matrix}\end{matrix}$ $\begin{matrix}{ΔNDWI}_{t} = \\ \begin{matrix}0.4 & 0.1 & 0.2 & 0.4 & 0.2 & 0.3 \\ 0.2 & 0.3 & 0.3 & 0.4 & 0.4 & 0.3 \\ 0.1 & 0.2 & 0.1 & 0.4 & 0.2 & 0.1 \\ 0.1 & 0.4 & 0.2 & 0.4 & 0.1 & 0.2 \\ 0.1 & 0.4 & 0 & 0.3 & 0.4 & 0.3 \\ 0.1 & 0.3 & 0 & 0.2 & 0.1 & 0.1\end{matrix}\end{matrix}$ α, *β,γ,* and *δ* are weights that control the influence of each factor on the impact score. Suppose α = 0.34, β = 0.45, γ = 0.32, δ = 0.45, and after substituting all the above values of α, β, γ, δ, *ΔTempₜ* , *ΔPrecₜ, ΔNDVIₜ*, *ΔNDWIₜ* in equation (1), *Impactₜ* will be, $\begin{matrix}{Impact}_{t} = \\ \begin{matrix}1.36 & 1.02 & 0.34 & 0 & 0 & 0 \\ 0.34 & 0.34 & 0.34 & 0 & 0.68 & 0.68 \\ 0.34 & 1.36 & 1.36 & 1.36 & 1.70 & 0.68\end{matrix}\end{matrix}$ $\begin{matrix}\begin{matrix}0.68 & 0.68 & 1.02 & 1.02 & 1.36 & 1.36 \\ 1.02 & 0.68 & 0.68 & 1.02 & 1.36 & 0.34 \\ 0.68 & 0.68 & 0.68 & 0.68 & 0.34 & 0.68\end{matrix} \\ + \\ \begin{matrix}1.35 & 0.45 & 0.9 & 0.45 & 0.9 & 0.45 \\ 0.45 & 1.35 & 1.35 & 1.35 & 1.35 & 1.35 \\ 0.9 & 0.9 & 0.9 & 1.8 & 0.9 & 0.45 \\ 1.35 & 0.9 & 1.35 & 1.35 & 0.45 & 0.9 \\ 1.8 & 1.35 & 0 & 1.35 & 2.25 & 0.45 \\ 0.45 & 1.35 & 0 & 0.9 & 0.45 & 0.45\end{matrix} \\ + \\ \begin{matrix}0.09 & 0.03 & 0.06 & 0.03 & 0.06 & 0.03 \\ 0.03 & 0.09 & 0.09 & 0.09 & 0.09 & 0.09 \\ 0.06 & 0.06 & 0.06 & 0.12 & 0.06 & 0.03 \\ 0.09 & 0.06 & 0.09 & 0.09 & 0.03 & 0.06 \\ 0.12 & 0.09 & 0 & 0.09 & 0.16 & 0.03 \\ 0.03 & 0.09 & 0 & 0.06 & 0.03 & 0.03\end{matrix} \\ + \\ \begin{matrix}0.18 & 0.04 & 0.09 & 0.18 & 0.09 & 0.13 \\ 0.09 & 0.13 & 0.13 & 0.18 & 0.18 & 0.13 \\ 0.04 & 0.09 & 0.04 & 0.18 & 0.09 & 0.04 \\ 0.04 & 0.18 & 0.09 & 0.18 & 0.04 & 0.09 \\ 0.04 & 0.18 & 0 & 0.13 & 0.18 & 0.13 \\ 0.04 & 0.13 & 0 & 0.09 & 0.04 & 0.04\end{matrix} \\ = \\ \begin{matrix}2.98 & 1.54 & 1.39 & 0.66 & 1.05 & 0.61 \\ 0.91 & 1.91 & 1.91 & 1.62 & 2.3 & 2.25 \\ 1.34 & 2.41 & 2.36 & 3.46 & 2.75 & 1.2\end{matrix} \\ \\ \begin{matrix}2.16 & 1.82 & 2.55 & 2.64 & 1.88 & 2.41 \\ 2.98 & 2.3 & 0.68 & 2.59 & 3.95 & 0.95\end{matrix}\end{matrix}$

Finally at step 212 of the method 200, the one or more hardware processors 102 are configured to generate a final user response associated with the multi-contextual user query by the large language model utilizing the user response and the multi-contextual user query. The machine learning model will generate response in spatially distributed (or spatial) format. Now, to make response understandable in simple terms, the LLM convert spatial data along with other numerical data generated by machine learning model into simple terms. Suppose, there are two users. User 1 ask question -"How has soil moisture content varied over the past 5 years during the critical growth stages of rice crops in my field?" and user 2 ask the question- "Can I reduce irrigation frequency for my rice crop this season based on the soil moisture levels and rainfall patterns of recent 5 years?". So, for both the response same satellite and climatic data along with machine learning model are needed but response will separate for both the users. For this reason, the user query is again provided to the LLM model along with machine learning output.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Embodiments of the present disclosure intelligently select the relevant time-series satellite data and climate information from repository using intents and entities generated utilizing pre-defined knowledge graph from the received multi contextual user query. This intelligent selection is done by creating and utilizing relationship strength-based node ranking graph. The time-series satellite data is combined with the climate data which is selected from climate repository to generate the spatially distributed response for the multi-contextual user query using machine learning model. Finally the spatially distributed response along with the multi contextual user query is provided to the large language model to get the final output.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) comprising:
generating (202), via one or more hardware processors, (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model, from a multi-contextual user query received via a user interface of a large language model (LLM);
identifying (204), via the one or more hardware processors, one or more actions and one or more data sources amongst a plurality of data sources by performing an intent-entity based graph traversal on a pre-defined knowledge graph using the one or more intents and the one or more entities, wherein the plurality of data sources comprises a remote sensing data source and a climate data source;
selecting (206), via the one or more hardware processors, (i) a time-series satellite data from a dynamically updated node selection graph in a satellite data repository if at least one data source amongst the one or more data sources identified is the remote sensing data source, and (ii) a time-series climate data from a climate data repository if at least one data source amongst the one or more data sources identified is the climate data source to generate a time-series data corresponding to the identified one or more actions;
selecting (208), via the one or more hardware processors, a machine learning model by traversing the pre-defined knowledge graph utilizing the generated time-series data;
generating (210), via the one or more hardware processors, a user response as at least one of (i) spatially distributed image, or (ii) spatially distributed data, by providing the generated time-series data to the machine learning model as input; and
generating (212), via the one or more hardware processors, a final user response associated with the multi-contextual user query by the large language model utilizing the user response and the multi-contextual user query.

2. The processor implemented method as claimed in claim 1, wherein the pre-defined knowledge graph is constructed based on agriculture data, satellite data and climate data, using a plurality of intents, a plurality of entities, a plurality of actions, a plurality of data sources and data associated with the plurality of data sources, a set of machine learning models.

3. The processor implemented method as claimed in claim 1, wherein the node selection graph in the satellite data repository comprising time-series satellite data received from a plurality of satellite data sources, is dynamically updated using the time-series satellite data received in a pre-defined time interval by,
arranging, via the one or more hardware processors, each data entry in the time-series satellite data in a three-dimensional array, wherein a first dimension of the three-dimensional array represents a satellite identifier of the data entry, a second dimension of the three-dimensional array represents a satellite pass date of the data entry, and a third dimension of the three-dimensional array represents a satellite type of the data entry;
projecting, via the one or more hardware processors, the three-dimensional array for each data entry into a two-dimensional map by aggregating the first dimension, the second dimension and the third dimension of the three-dimensional array, wherein the two-dimensional map represents a spatial structure with a latitude and a longitude corresponding to the data entry;
creating, via the one or more hardware processors, an embedded vector corresponding to the two-dimensional map of each data entry using an attribute encoding technique, wherein the embedded vector is stored in a geospatial database; and
generating, via the one or more hardware processors, the node selection graph by creating a set of relationships between data entries of the plurality of satellite data sources.

4. The processor implemented method as claimed in claim 3, wherein the node selection graph comprising a plurality of nodes and a plurality of edges is generated by,
representing, via the one or more hardware processors, each data entry as a node comprising a set of attributes in the node selection graph, wherein the set of attributes comprising a satellite name, a satellite data identifier, a date representing a time of data capture, spatial and temporal resolution, and a set of pre-computed indices; and
determining, via the one or more hardware processors, a weight for a relationship represented as an edge in the node selection graph, between any two data entries based on a set of relation types, wherein the set of relation types comprises a direct common index, a data continuity, a spatial resolution, a temporal resolution, and a complementary observation.

5. The processor implemented method as claimed in claim 4, wherein the time-series satellite data from the node selection graph for the multi-contextual user query is selected by,
selecting, via the one or more hardware processors, a primary node in the node selection graph based on the satellite name identified from the one or more actions;
determining, via the one or more hardware processors, a set of rows for the time-series satellite data with each row comprising a set of nodes associated with each satellite amongst a set of satellites, wherein the set of nodes are connected to the primary node, wherein the weight of the edge of each node in the set of nodes connected to the primary node is greater than a pre-defined value;
combining, via the one or more hardware processors, the set of nodes from each row based on the date to generate a series of satellite data; and
returning, via the one or more hardware processors, the time-series satellite data as an ordered set of the series of satellite data for each row.

6. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
generate (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model, from a multi-contextual user query received via a user interface of a large language model (LLM);
identify one or more actions and one or more data sources amongst a plurality of data sources by performing an intent-entity based graph traversal on a pre-defined knowledge graph using the one or more intents and the one or more entities, wherein the plurality of data sources comprises a remote sensing data source and a climate data source;
select (i) a time-series satellite data from a dynamically updated node selection graph in a satellite data repository if at least one data source amongst the one or more data sources identified is the remote sensing data source, and (ii) a time-series climate data from a climate data repository if at least one data source amongst the one or more data sources identified is the climate data source to generate a time-series data corresponding to the identified one or more actions;
select a machine learning model by traversing the pre-defined knowledge graph utilizing the generated time-series data;
generate a user response as at least one of (i) spatially distributed image, or (ii) spatially distributed data, by providing the generated time-series data to the machine learning model as input; and
generate a final user response associated with the multi-contextual user query by the large language model utilizing the user response and the multi-contextual user query.

7. The system as claimed in claim 6, wherein the pre-defined knowledge graph is constructed based on agriculture data, satellite data and climate data, using a plurality of intents, a plurality of entities, a plurality of actions, a plurality of data sources and data associated with the plurality of data sources, a set of machine learning models.

8. The system as claimed in claim 6, wherein the node selection graph in the satellite data repository comprising time-series satellite data received from a plurality of satellite data sources, is dynamically updated using the time-series satellite data received in a pre-defined time interval by,
arranging each data entry in the time-series satellite data in a three-dimensional array, wherein a first dimension of the three-dimensional array represents a satellite identifier of the data entry, a second dimension of the three-dimensional array represents a satellite pass date of the data entry, and a third dimension of the three-dimensional array represents a satellite type of the data entry;
projecting the three-dimensional array for each data entry into a two-dimensional map by aggregating the first dimension, the second dimension and the third dimension of the three-dimensional array, wherein the two-dimensional map represents a spatial structure with a latitude and a longitude corresponding to the data entry;
creating an embedded vector corresponding to the two-dimensional map of each data entry using an attribute encoding technique, wherein the embedded vector is stored in a geospatial database; and
generating the node selection graph by creating a set of relationships between data entries of the plurality of satellite data sources.

9. The system as claimed in claim 8, wherein the node selection graph comprising a plurality of nodes and a plurality of edges is generated by,
representing each data entry as a node comprising a set of attributes in the node selection graph, wherein the set of attributes comprising a satellite name, a satellite data identifier, a date representing a time of data capture, spatial and temporal resolution, and a set of pre-computed indices; and
determining a weight for a relationship represented as an edge in the node selection graph, between any two data entries based on a set of relation types, wherein the set of relation types comprises a direct common index, a data continuity, a spatial resolution, a temporal resolution, and a complementary observation.

10. The system as claimed in claim 9, wherein the time-series satellite data from the node selection graph for the multi-contextual user query is selected by,
selecting a primary node in the node selection graph based on the satellite name identified from the one or more actions;
determining a set of rows for the time-series satellite data with each row comprising a set of nodes associated with each satellite amongst a set of satellites, wherein the set of nodes are connected to the primary node, wherein the weight of the edge of each node in the set of nodes connected to the primary node is greater than a pre-defined value;
combining the set of nodes from each row based on the date to generate a series of satellite data; and
returning the time-series satellite data as an ordered set of the series of satellite data for each row.

11. One or more non-transitory machine-readable information storage mediums comprising one or more instructions which when executed by one or more hardware processors cause:
generating (i) one or more intents using a pretrained Recurrent Neural Network (RNN) based Long Short-term Memory (LSTM) model, and (ii) one or more entities using a Bidirectional Long Short-Term Memory with Conditional Random Field (BiLSTM-CRF) model, from a multi-contextual user query received via a user interface of a large language model (LLM);
identifying one or more actions and one or more data sources amongst a plurality of data sources by performing an intent-entity based graph traversal on a pre-defined knowledge graph using the one or more intents and the one or more entities, wherein the plurality of data sources comprises a remote sensing data source and a climate data source;
selecting (i) a time-series satellite data from a dynamically updated node selection graph in a satellite data repository if at least one data source amongst the one or more data sources identified is the remote sensing data source, and (ii) a time-series climate data from a climate data repository if at least one data source amongst the one or more data sources identified is the climate data source to generate a time-series data corresponding to the identified one or more actions;
selecting a machine learning model by traversing the pre-defined knowledge graph utilizing the generated time-series data;
generating a user response as at least one of (i) spatially distributed image, or (ii) spatially distributed data, by providing the generated time-series data to the machine learning model as input; and
generating a final user response associated with the multi-contextual user query by the large language model utilizing the user response and the multi-contextual user query.

12. The one or more non-transitory machine-readable information storage mediums as claimed in claim 11, wherein the pre-defined knowledge graph is constructed based on agriculture data, satellite data and climate data, using a plurality of intents, a plurality of entities, a plurality of actions, a plurality of data sources and data associated with the plurality of data sources, a set of machine learning models.

13. The one or more non-transitory machine-readable information storage mediums as claimed in claim 11, wherein the node selection graph in the satellite data repository comprising time-series satellite data received from a plurality of satellite data sources, is dynamically updated using the time-series satellite data received in a pre-defined time interval by,
arranging each data entry in the time-series satellite data in a three-dimensional array, wherein a first dimension of the three-dimensional array represents a satellite identifier of the data entry, a second dimension of the three-dimensional array represents a satellite pass date of the data entry, and a third dimension of the three-dimensional array represents a satellite type of the data entry;
projecting the three-dimensional array for each data entry into a two-dimensional map by aggregating the first dimension, the second dimension and the third dimension of the three-dimensional array, wherein the two-dimensional map represents a spatial structure with a latitude and a longitude corresponding to the data entry;
creating an embedded vector corresponding to the two-dimensional map of each data entry using an attribute encoding technique, wherein the embedded vector is stored in a geospatial database; and
generating the node selection graph by creating a set of relationships between data entries of the plurality of satellite data sources.

14. The one or more non-transitory machine-readable information storage mediums as claimed in claim 13, wherein the node selection graph comprising a plurality of nodes and a plurality of edges is generated by,
representing each data entry as a node comprising a set of attributes in the node selection graph, wherein the set of attributes comprising a satellite name, a satellite data identifier, a date representing a time of data capture, spatial and temporal resolution, and a set of pre-computed indices; and
determining a weight for a relationship represented as an edge in the node selection graph, between any two data entries based on a set of relation types, wherein the set of relation types comprises a direct common index, a data continuity, a spatial resolution, a temporal resolution, and a complementary observation.

15. The one or more non-transitory machine-readable information storage mediums as claimed in claim 14, wherein the time-series satellite data from the node selection graph for the multi-contextual user query is selected by,
selecting a primary node in the node selection graph based on the satellite name identified from the one or more actions;
determining a set of rows for the time-series satellite data with each row comprising a set of nodes associated with each satellite amongst a set of satellites, wherein the set of nodes are connected to the primary node, wherein the weight of the edge of each node in the set of nodes connected to the primary node is greater than a pre-defined value;
combining the set of nodes from each row based on the date to generate a series of satellite data; and
returning the time-series satellite data as an ordered set of the series of satellite data for each row.
